(19) Europäisches Patentamt
European Patent Office
Office européen des brevets

(11) Veröffentlichungsnummer: **0 255 010 B1**

(12) **EUROPÄISCHE PATENTSCHRIFT**

(45) Veröffentlichungstag der Patentschrift: **24.04.91**

(51) Int. Cl.$^5$: **C09K 21/12**

(21) Anmeldenummer: **87110460.0**

(22) Anmeldetag: **20.07.87**

# (54) Intumeszenzmassen, Beschichtungen und Konstruktionselemente hergestellt unter Verwendung dieser Intumeszenzmassen und ein Verfahren zur Herstellung dieser Intumeszenzmassen.

(30) Priorität: **29.07.86 DE 3625556**

(43) Veröffentlichungstag der Anmeldung:
**03.02.88 Patentblatt 88/05**

(45) Bekanntmachung des Hinweises auf die Patenterteilung:
**24.04.91 Patentblatt 91/17**

(84) Benannte Vertragsstaaten:
**CH DE FR GB LI NL**

(56) Entgegenhaltungen:
**EP-A- 0 051 106**
**EP-A- 0 061 024**
**EP-A- 0 217 080**
**US-A- 2 881 088**

(73) Patentinhaber: **BAYER AG**
**W-5090 Leverkusen 1 Bayerwerk(DE)**

(72) Erfinder: **von Bonin, Wulf, Dr.**
**Mendelssohnstrasse 30**
**W-5090 Leverkusen(DE)**

**EP 0 255 010 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Intumeszenzmassen, Beschichtungen und Konstruktionselemente hergestellt unter Verwendung dieser Intumeszenzmassen und ein Verfahren zur Herstellung dieser Intumeszenzmassen.

Die vorliegende Erfindung bezieht sich auf Intumeszenzmassen, daraus hergestellte Beschichtungen und Konstruktionselemente und auf ein Verfahren zur Herstellung dieser Intumeszenzmassen, d.h. auf Materialien für den vorbeugenden Brandschutz und deren Herstellung, die im Falle eines Brandes aufschäumen und dabei einen isolierenden und Feuer abweisenden Schaum ausbilden, der den rückwärtigen, dem Feuer abgewandten Bezirk gegen Feuer und Hitze schützt und auftretende Verwerfungen, Ritzen, Fugen und Spalten gegen den Durchtritt von Rauch und Flammen verschließt.

Die bisher bekannten Intumeszenzmassen haben den Nachteil, daß sei entweder Schäume ergeben, die gegen Flammenerosion und/oder Löschwasser nicht im gewünschten Ausmaß mechanisch beständig sind (z.B. die aus EP-OS 51 347 und US-PS 3 955 987 bekannten Intumeszenzmassen) oder, wie im Falle von Intumeszenzmassen auf der Basis von Epoxiharzen (siehe z.B. die Produkte Pitchar und Chartek®) zwar Schäume von relativ guten Festigkeiten ergeben, aber dann unerwünscht hohe Viskositäten oder lange Aushärtungszeiten aufweisen, was ihre Anwendbarkeit beeinträchtigt.

Es wurden Intumesenzmassen gefunden, die dadurch gekennzeichnet sind, daß sie erhältlich sind durch Umsetzung von Polyisocyanaten der Formel (2)

$$Q(NCO)_m \qquad (2),$$

in der

m

für eine Zahl von 2 bis 4, vorzugsweise für 2,0 bis 3,0 und

Q

für einen aliphatischen Kohlenwasserstoffrest mit 2 bis 18, vorzugsweise 6 bis 10 C-Atomen,
für einen cycloaliphatischen Kohlenwasserstoffrest mit 4 bis 15, vorzugsweise 5 bis 10 C-Atomen,
für einen aromatischen Kohlenwasserstoffrest mit 6 bis 15, vorzugsweise 6 bis 13 C-Atomen oder
für einen araliphatischen Kohlenwasserstoffrest mit 8 bis 15, vorzugsweise 8 bis 13 C-Atomen steht

mit mindestens zwei Hydroxylgruppen enthaltenden phosphorhaltigen Kondensationsprodukten und Boroxiden und/oder Entwässerungsprodukten von Borsäuren.

Beispiele für Polyisocyanate der Formel (2) sind: Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimethyl-5-isocyanatomethyl-cyclohexan (siehe DE-AS 1 202 785 und US-PS 3 401 190), 2,4- und 2,6-Hexahydrotoluylendiisocyanat, sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat, sowie beliebige Gemische dieser Isomeren, Diphenylmethan-2,4'- und/oder -4,4'-diisocyanat, sowie deren mehrkernige höherfunktionellen Derivate, und Naphthylen-1,5-diisocyanat.

Ferner kommen beispielsweise in Frage: Triphenylmethan-1,4',4"-triisocyanat, Polyphenyl-polymethylen-polyisocyanate, wie sie durch Anilin-Formaldehyd-Kondensation und anschließende Phosgenierung erhalten werden (siehe GB-PS 874 430 und 848 671) , m- und p-Isocyanatophenyl-sulfonyl-isocyanate (siehe US-PS 3 454 606), perchlorierte Arylpolyisocyanate (siehe DE-AS 1 157 601 = US-PS 3 277 138), Carbodiimidgruppen aufweisende Polyisocyanate (siehe DE-PS 1 092 007 = US-PS 3 152 162, DE-OS 2 504 400, 2 537 685 und 2 552 250), Norbornan-diisocyanate (siehe US-PS 3 492 330), Allophanatgruppen aufweisende Polyisocyanate (siehe GB-PS 994 890, BE-PS 761 626 und NL-PS 7 102 524), Isocyanuratgruppen aufweisende Polyisocyanate (siehe US-PS 3 001 973 und DE-PS 1 022 789, 1 222 067 und 1 027 394 und DE-OS 1 929 034 und 2 004 048), Urethangruppen aufweisende Polyisocyanate (siehe DE-PS 752 261 oder US-PS 3 394 164 und 3 644 457), acylierte Harnstoffgruppen aufweisende Polyisocyanate (siehe DE-PS 1 230 778), Biruretgruppen aufweisende Polyisocyanate (siehe US-PS 3 124 605, 3 201 372 und 3 124 605 und GB-PS-889 050), durch Telomerisationsreaktionen hergestellte Polyisocyanate (siehe US-PS 3 654 106), Estergruppen aufweisende Polyisocyanate (siehe GB-PS 965 474 und 1 072 956, US-PS 3 567 763 und DE-PS 1 231 688), Umsetzungsprodukte der obengenannten Isocyanate mit Acetalen (siehe DE-PS 1 072 385) und polymere Fettsäureester enthaltende Polyisocyanate (siehe US-PS 3 455 883).

Es ist auch möglich, die bei der technischen Isocyanatherstellung anfallenden, Isocyanatgruppen

aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden die technisch leicht zugänglichen Polyisocyanate, z.B. das 2,4- und 2,6-Toluylendiisocyanat, sowie beliebige Gemische dieser Isomeren (= "TDI"), insbesondere die Polyisocyanate vom MDI-Typ, das sind 4,4'-und/oder 2,4'-Diphenylmethandiisocyanat und/oder Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate (= modifizierte Polyisocyanate), insbesondere solche modifizierten Polyisocyanate, die sich von 2,4-und/oder 2,6-Toluylendiisocyanat oder vom 4,4'- und/oder 2,4'-Diphenylmethandiisocyanat ableiten.

Monoisocyanate können anteilig, z.B. bis zu höchstens 30 Gew.-%, bezogen auf Polyisocyanat, mitverwendet werden.

Bei den mindestens zwei Hydroxylgruppen enthaltenden phosphorhaltigen Kondensationsprodukten kann es sich beispielsweise um Kondensationsprodukte von primären oder sekundären aliphatischen, cycloaliphatischen, aromatischen, araliphatischen oder heterocyclischen Mono-und/oder Polyaminen mit Carbonylverbindungen und Dialkylphosphiten handeln. Solche Kondensationsprodukte können gegebenenfalls zusätzlich oxyalkyliert sein (siehe z.B. DE-PS 1 143 022, US-PS 3 076 010, DE-AS 1 803 747 und DE-AS 1 928 265). Bevorzugte, mindestens zwei Hydroxylgruppen enthaltende phosphorhaltige Kondensationsprodukte entsprechen der Formel (1)

$$(RO)_2PO-CH_2-N(CHX-CHX_1-OH)_2 \quad (1),$$

in der
R für $C_1$-$C_8$-Alkyl oder $C_1$-$C_8$-Hydroxyalkyl und
X und $X_1$ unabhängig voneinander für Wasserstoff oder Methyl stehen.

Vorzugsweise stehen in Formel (1) R für Ethyl oder Hydroxyethyl X und $X_1$ für Wasserstoff.

Es kommen auch in Betracht sonstige Phosphoratome enthaltende Polyole, z.B. Hydroxylgruppen enthaltende

- Ester von phosphorhaltigen Säuren, wie Phosphorsäuren der verschiedenen Kondensationsgrade bis zur Metaphosphorsäure, oder von Phosphonsäuren, Phosphinsäuren, z.B. deren Alkoxylierungsprodukte und/oder Umsetzungsprodukte,
- Salze aus Hydroxylgruppen enthaltenden Aminen und den verschiedenen Phosphorsäuren, bzw.
- Amide der verschiedenen Phosphorsäuren, die Hydroxylgruppen enthalten.

Bei den Boroxiden und/oder Entwässerungsprodukten von Borsäure kann es sich beispielsweise um das ganze Spektrum von Verbindungen handeln, das zwischen den summarischen Formeln $H_3BO_3$ und $B_2O_3$ liegt. Je mehr chemisch gebundenes oder gar freies Wasser vorhanden ist, je eher setzt dieses bei der Reaktion mit Polyisocyanaten Kohlendioxid frei und führt damit zu im allgemeinen weniger erwünschten schaumstoffartigen Produkten. Vorzugsweise wird deshalb Borsäure eingesetzt, die bei Normaldruck mindestens bei 80 °C, vorzugsweise bei 100 bis 130 °C, 2 bis 60 Stunden lang getrocknet worden ist oder Bortrioxid. Besonders bevorzugt ist Borsäure, die bei 110 bis 125 °C 2 bis 24 Stunden lang getrocknet wurde.

Anstelle von, aber auch zusätzlich zu Boroxiden und/oder Entwässerungsprodukten von Borsäure können Anlagerungsprodukte von Borsäure an Hydroxylverbindungen wie Pentaerythrit, Glycerin, Zucker oder (Bor-)Silikate zum Einsatz gelangen. Vorzugsweise sind solche Anlagerungsprodukte wie oben beschrieben entwässert worden.

Die erfindungsgemäßen Intumeszenzmassen können gegebenenfalls zusätzlich zu den zuvor beschriebenen drei essentiellen Komponenten Füll- und/oder Hilfsstoffe enthalten. Als Füllstoffe kommen insbesondere Aluminiumhydroxid und seine Dehydratisierungsprodukte in Frage, jedoch auch Kalziumsilikat, Kaolin, Kreide, Glas, insbesondere in Kugel- oder Faserform, Gesteinsmehl, Dolomit, trockene oder hydratisierte Zeolithe, Gips, Talkum, Steinwolle, Zement, Koks, Holzmehl, Metallpulver, Cyanamide, Dicyandiamide, Harnstoffe, Allophanate, Melamin und dessen Kondensationsprodukte mit Formaldehyd, Hydrazodicarbonamide, Urazole, Guanidine, Biurete und deren Polykondensationsprodukte und Salze. Bei den Polykondensationsprodukten handelt es sich vorzugsweise um wasserunlösliche Harnstoff- oder Melamin-Formaldehydkondensationsprodukte oder Phenolharze, bei den Salzen vorzugsweise um Salze von Phosphorsäuren. Bei den Füllstoffen kann es sich allgemein um natürliche oder synthetische, anorganische oder organische Mineralien handeln, die massiv, porös, hohl, kristallin, amorph, pulvrig, kugelig oder faserförmig sein und

gegebenenfalls Kristall- oder Hydratwasser enthalten können.

Bei den Hilfsstoffen kann es sich beispielsweise um Katalysatoren, Polyalkohole, Farbstoffe, Weichmacher, Verbindungen, die mit Isocyanaten reagieren können, Treibmittel und/oder Trockenmittel handeln.

Als Katalysatoren kommen beispielsweise organische Metallverbindungen in Frage, z.B. Zinn-, Blei- und/oder Cer-Verbindungen, z.B. Octoate, oder tertiäre Amine, Phospholinoxide oder Trimerisierungskatalysatoren. Bei Polyalkoholen kann es sich beispielsweise um auf dem Gebiet der Polyurethanchemie übliche Polyester und/oder Polyether handeln, die Hydroxygruppen enthalten. Als Weichmacher kommen z.B. solche vom Typ der Phosphor-und/oder Phosphonsäureester in Frage. Als Verbindungen, die mit Isocyanaten reagieren können, kommen z.B. in Frage Wasser, auch mit Borsäure als Kristallwasser oder als Hydratwasser eingebrachtes Wasser, Polyalkohole, Polyepoxide, Kohlenhydrate, Glycerin, Trimethylolpropan, Glykol, Neopentylglykol, Stärke, Cellulose, halogeniertes Neopentylglykol, Pentaerythrit, Sorbit, Bisphenole wie Bisphenol A und Dihydroxy-diphenylmethan, Amine wie Ethanolamin, Di- und Triethanolamin, Diaminodiphenylmethan, Hydrazin, Ethylendiamin und Polyalkylenpolyamine und deren Ethoxylierungs-, Propoxylierungs- und/oder Epichlorhydrinumsetzungsprodukte. Soweit derartige Verbindungen mit Isocyanaten unter Vernetzung reagieren können, können diese Verbindungen als eingebautes Carbonific wirken, d.h. als Kohlenstoffquelle für Intumeszenzschaum. Bei den Treibmitteln kann es sich z.B. um Stickstoff, Stickoxide, Kohlenmonoxid, Kohlendioxid, Wasserdampf und/oder andere übliche Treibmittel handeln.

Bei der Umsetzung von Polyisocyanaten mit mindestens zwei Hydroxylgruppen enthaltenden phosphorhaltigen Kondensationsprodukte und Boroxiden und/oder Entwässerungsprodukten von Borsäuren kann Polyisocyanat im Verhältnis zu dem Kondensationsprodukt beispielsweise in Mengen von 50 bis 130 Mol-%, bezogen auf die stöchiometrisch erforderliche Menge, eingesetzt werden. Falls in das Reaktionsgemisch Wasser eingebracht wird, ist es stets angezeigt, die Menge Polyisocyanat, die mit Wasser reagiert, zusätzlich einzusetzen. Bevorzugt wird Polyisocyanat im Verhältnis zu dem Kondensationsprodukt in Mengen von 75 bis 110 Mol-%, bezogen auf die stöchiometrisch erforderliche Menge, eingesetzt, besonders bevorzugt entspricht dieses Verhältnis den stöchiometrisch erforderlichen Mengen. Wird weniger als die stöchiometrisch erforderliche Menge Polyisocyanat eingesetzt, so werden die erhaltenen Intumeszenzmassen schrittweise weniger gut wasserbeständig. Wird mehr als die stöchiometrisch erforderliche Menge Polyisocyanat eingesetzt, so kann die erhaltene Intumeszenzmassen weiter reaktionsfähig sein, was z.B. für Vernetzungsreaktionen, für die Wechselwirkung mit dem Material auf das solche Intumeszenzen gegebenenfalls als Beschichtungen aufgebracht werden sollen, für die Wechselwirkung mit sonstigen Materialien, die in solchen Intumeszenzmassen enthaltenden Konstruktionselementen vorhanden sind oder für spätere Härtungsreaktionen von Vorteil sein kann.

Bezogen auf den Gesamtansatz können Boroxide und/oder Entwässerungsprodukte von Borsäure beispielsweise in Mengen von 0,5 bis 35 Gew.-% eingesetzt werden. Vorzugsweise beträgt diese Menge von 3 bis 20 Gew.-%.

Bezogen auf das gesamte Intumeszenzmaterial können Füllstoffe, insbesondere Aluminiumhydroxid und dessen Dehydratisierungsprodukte, z.B. in Mengen von 0 bis 70 Gew.-% vorhanden sein. Vorzugsweise enthalten die erfindungsgemäßen Intumszenzmassen Füllstoffe in einer Menge von 10 bis 45 Gew.-%.

Bezogen auf Polyisocyanat plus mindestens zwei Hydroxylgruppen enthaltende phosphorhaltige Kondensationsprodukte, können Hilfsstoffe insgesamt z.B. in Mengen von 0 bis 800 Gew.-%, vorzugsweise 0 bis 150 Gew.-%, insbesondere von 2 bis 80 Gew.-%, eingesetzt werden.

Die erfindungsgemäßen Intumeszenzmassen können massiv, porig oder schaumstoffartig sein und beispielsweise eine Dichte im Bereich von 0,1 bis 1,8 g/cm$^3$ aufweisen. Vorzugsweise liegt die Dichte im Bereich von 0,2 bis 1,5, besonders bevorzugt im Bereich von 0,5 bis 1,2 g/cm$^3$.

Die erfindungsgemäßen Intumeszenzmassen zeichnen sich durch eine Reihe von Vorteilen aus. So ergeben sie im Brandfalle einen besonders harten und widerstandsfähigen Intumeszenzschaum, der eine gute Isolierwirkung, Flammenerosionsbeständigkeit und Festigkeit aufweist. Sie haben bei Raumtemperatur Aushärtungszeiten, die im Sekunden-bis Minuten-Bereich liegen; sie lassen sich daher in nahezu beliebiger Dicke in einem Arbeitsgang in Form einer Schicht oder als massives Teil z.B. durch Besprühen oder Gießen, herstellen. Sie haben in Form ihrer bei Beflammung entstehenden Carbonisierungsprodukte eine überraschend gute Festigkeit, da bisher nur bekannt war, daß Phosphorsäuren in Kombination mit Aluminiumoxiden eine feste Phosphatkeramik ergeben, nicht aber, daß diese durch den erfindungsgemäßen Borsäure- bzw. Boroxid-Zusatz noch deutlich verbessert werden könnte. Sie beginnen bei Temperaturen von über 200 bis 300 °C aufzuschäumen und expandieren, je nach Zusammensetzung und Art der Erhitzung, um beispielsweise 50 bis 1000 Vol-%. Sie können halogenfrei formuliert und schwer entflammbar eingestellt werden.

Die erfindungsgemäßen Intumeszenzmassen können zur Herstellung von Beschichtungen und Konstruktionselementen verwendet werden. Die vorliegende Erfindung betrifft deshalb auch Beschichtungen

und Konstruktionselemente, die unter Verwendung der zuvor beschriebenen Intumeszenzmassen hergestellt wurden. Derartige Beschichtungen können z.B. auf Trägern, Stützen, Paneelen oder sonstigen Bauteilen aufgebracht werden. Bei aus den erfindungsgemäßen Intumeszenzmassen hergestellten Konstruktionselementen kann es sich beispielsweise handeln um Rohre, Rohrverkleidungen, Kabeltrassen, Wandverkleidungen, Behälterabdeckungen, Absperrvorrichtungen, Wandelemente, Gehäuse, in Fugen eingebaute oder in sie eingedrückte Profile, Dichtungselemente, Halbzeuge und Formteile für Sicherungsvorrichtungen, Sandwiches, Bestandteile von Verbundwerkstoffen in Plattenform, Pfropfen und Verschlußelemente. Solche Beschichtungen und Konstruktionslemente sind vorzugsweise hart bis zäh und massiv, porös oder schaumstoffartig und können kontinuierlich oder diskontinuierlich hergestellt werden.

Für sie besteht insbesondere im Schiff-, Fahrzeug-, Maschinen-, Hoch-, Raffinerie- und Tiefbau, beim Bau chemischer Anlagen sowie in der Elektrotechnik ein erheblicher Bedarf, insbesondere dort, wo mit dem Auf-treten von Wasser (z.B. Schwitzwasser, Anmachwasser für Mörtel und Zemente, Kondenswasser, Regenwasser, Grundwasser) und im Brandfalle mit dem Auftreten von hohen Temperaturen, starker Flammenerosion und Löschwasser zu rechnen ist.

Solche Beschichtungen und Konstruktionselemente können ausschließlich aus den erfindungsgemäßen Intumeszenzmassen hergestellt werden, es kann sich dabei jedoch auch um Beschichtungen und Konstruktionselemente handeln, die die erfindungsgemäßen Intumeszenzmassen als Bestandteil einer Werkstoffkombination enthalten. Andere Bestandteile derartigen Werkstoffkombinationen können z.B. Verstärkungselemente, Trägersubstrate und beliebige Montage- oder Beschichtungshilfsmittel sein.

Die vorliegende Erfindung betrifft weiterhin ein Verfahren zur Herstellung von Intumeszenzmassen und diese enthaltende Beschichtungen und Konstruktionselemente, das dadurch gekennzeichnet ist, daß man Polyisocyanate mit wenigstens zwei Hydroxylgruppen enthaltenden phosphorhaltigen Kondensationsprodukten und Boroxiden und/oder Entwässerungsprodukten von Borsäure umsetzt. Dieser Umsetzung können gegebenenfalls Füll- und/oder Hilfsstoffe zugefügt werden. Für alle essentiellen und fakultativen Komponenten für diese Umsetzung sind weiter oben geeignete und bevorzugte Spezies und geeignete und bevorzugte relative Mengen beschrieben worden. Geeignete Umsetzungstemperaturen der Komponenten sind beispielsweise solche im Bereich von -10 bis 120 °C. Bevorzugt führt man die Umsetzung bei 10 bis 45 °C durch.

Vorzugsweise werden die Intumeszenzmassen direkt als Konstruktionselemente oder Beschichtungen hergestellt, z.B. durch Aufsprühen, Aufstreichen oder Gießen in offene oder geschlossene Formen oder auf geeignete Substrate oder Träger, gegebenenfalls mit Zufuhr von Hilfsgasen und/oder Wärme. Insbesondere Konstruktionselemente können auch über Rohlinge oder Halbzeuge mit anschließender mechanischer Bearbeitung hergestellt werden. Bei den Halbzeugen kann es sich z.B. um Schaumstoffe, Profile oder Beschichtungen handeln, aus denen z.B. durch Schneiden, Pressen, Stanzen, aber auch durch Warmverformen, Verschweißen, Beschichten oder Verkleben Endprodukte erhalten werden können.

Das erfindungsgemäße Herstellungsverfahren kann so durchgeführt werden, daß man alle Einzelkomponenten oder bereits vorgemischte Kombinationen von Einzelkomponenten vermischt. Diese Vermischung kann auch unmittelbar bei oder nahe bei dem Ort erfolgen, bei dem die fertige Intumeszenzmassen verwendet werden soll. Solche Mischungen können maschinell oder von Hand und drucklos oder unter Druck z.B. in geheizte oder ungeheizte, offene oder geschlossene Formen oder in zu verschließende Öffnungen eingebracht werden, wo sie dann aushärten und gegebenenfalls aufschäumen können. Sie können auch auf die zu schützenden Substrate oder Untergründe aufgebracht werden.

Durch Kombination der erfindungsgemäßen Intumeszenzmassen mit geschäumten oder massiven, anorganischen oder organischen Zuschlagstoffen, z.B. Polystyrolschaum, Polyurethanschaum, Phenoplasten, Aminoplasten oder Kies, Blähton, Harnstoff- oder Phenolharzschäumen, Schaumglas, Glasfasern, Holz, Mineralwolle oder Bims können als Konstruktionselemente auch Verbundwerkstoffe mit speziellen Intumeszenzeigenschaften erhalten werden. Die Herstellung von mit Fasern, Drähten, Geweben, Strängen oder Vliesen aus organischen oder anorganischen Materialien verstärken Beschichtungen oder Konstruktionselementen oder ihre Verwendung als Bestandteile in Mehrschicht-oder Sandwichaufbauten ist ebenfalls möglich. Die erfindungsgemäßen Intumeszenzmassen können auch in Kombination mit anderen Intumeszenzmassen auf organischer oder anorganischer Basis verwendet werden.

Die folgenden Beispiele dienen der Erläuterung der Erfindung.

Beispiele:

Die angegebenen Teile sind Gewichtsteile oder -prozente, soweit nichts anderes vermerkt ist.

Als Polyisocyante wurden folgende Typen eingesetzt:

Polyisocyanat A:
Technisches 4,4'-Diphenylmethandiisocyanat mit einem Gehalt an Isomeren und ca. 10% an höherfunktionellen Mehrkernanteilen. Isocyanatgehalt ca. 31 %.
Polyisocyanat B:
Gleichartiges Polyisocyanat wie A mit einem etwa doppelten Gehalt an höherkondensierten Anteilen. Isocyanatgehalt ca. 31 %.
Polyisocyanat C:
Gleichartiges Polyisocyanat wie A und B mit einem nochmals etwa verdoppelten Gehalt an höherkondensierten Anteilen. Isocyanatgehalt ca. 31 %.

Als mindestens zwei Hydroxylgruppen enthaltende phosphorhaltige Kondensationsprodukte zur Reaktion mit den Polyisocyanten wurden technnische Produkte mit folgenden idealisierten Strukturen eingesetzt:
Kondensationsprodukt K:

$(C_2H_5O)_2POCH_2N(C_2H_4OH)_2$

Kondensationsprodukt L:

$(CH_3O)_2POCH_2N(C_3H_6OH)_2$(Isopropyltyp).

Als Füllstoffe wurden eingesetzt:
Füllstoff A:
Al-Hydroxid, Apyral® B 2, Bayer AG
Füllstoff B:
Al-Hydroxid, Apyral® B 90, Bayer AG
Füllstoff C:
Ca-Carbonat Calcidar® 40, Fa. Omya, Köln
Füllstoff D:
Glaspulver, Korngröße 75-150 Mikron.
Als Zusatzstoffe wurden eingesetzt:
Zusatzstoff A:
verzweigter Polyester aus Glycerin, Ethylenglykol und Adipinsäure; OH-Zahl 255, Säurezahl 0,8
Zusatzstoff B:
auf Glycerin gestarteter Ethylenoxid-Polyether; OH-Zahl 250, Säurezahl 0,1
Zusatzstoff C:
Zinnoctoat
Zusatzstoff D:
Titandioxid-Weißpigment
Zusatzstoff E:
wasserfreies Zeolithpulver, Baylith® T, Bayer AG
Zusatzstoff F:
Methylphosphonsäure-dimethylester
Zusatzstoff G:
Melaminphosphat
Zusatzstoff H:
permethylierter ß, ß-Diaminodiethylether.
Als Borverbindungen (BV) wurden eingesetzt:
BV A:
handelsübliche Borsäure in Pulverform
BV B:
BV A 48 h bei 120 °C im Umluftschrank getrocknet
BV C:
handelsübliches gepulvertes Bortrioxid.

Die Herstellung der Intumeszenzmassen erfolgte, indem das Kondensationsprodukt im Gemisch (x) mit den übrigen Komponenten bei 15 °C unter gutem Rühren mit dem Isocyanat (y) vermischt, in eine verschließbare senkrechte Plattenform mit 2 cm Dicke, die auf 40 °C vorgeheizt war, eingegossen und dort zur Abreaktion gebracht wurde. Nach 10 Minuten wurde dann entformt.

Weiterhin wurde das Gemisch (x) über Exzenterschneckenpumpen bzw. Zahnradpumpen einem aus der Polyurethantechnik bekannten Rührwerksmischkopf zugeführt, dort mit der Isocyanatkomponente (y)

vermischt und dann im Luftstrom auf 2 mm dicke frisch gesandstrahlte Stahlblechplatten (50 x 50 cm) bis zu einer Schichtdicke von 1 cm aufgespüht. Diese Platten wurden nach 10 Tagen einem Brandtest in einer Kleinbrandkammer in Anlehnung an DIN 4102 beflammt. Die Beschichtung wurde feuerseitig angebracht, aus 5 Meßstellen wurde die durchschnittliche Rückseitentemperatur auf der Stahlblechplatte in Abhängigkeit von der Beflammungsdauer bestimmt.

Die hergestellten Intumeszenzmassen sind im folgenden rezepturmäßig in tabellarischer Form aufgeführt.

Die Mengenangaben der Komponenten beziehen sich in der Tabelle auf Gewichtsteile. Als Härtung (ca. Min) wird die Zeit angegeben, (in ca. Minuten) nach der die aufgesprühte Beschichtung bei einer Umgebungstemperatur von ca. 19 °C nicht mehr fließfähig war und "stand", d.h. nicht mehr abfloß. Das Raumgewicht wurde an der entformten Platte aus Würfeln von 1,5 cm Kantenlänge bestimmt. Die Intumeszenz wurde angegeben als die jeweils größte Höhe in cm, die die Intumeszenzmasse im Kleinbrandversuch, ausgehend von 1 cm Schichtdicke, erreichte. Als Stabilität wurde die empirisch durch vergleichende Eindrückversuche (gemessen wurde mit einem Penetrometer nach Klein) bestimmte Stabilität des im Kleinbrandversuch gebildeten Intumeszenzschaumes bezeichnet. Hierbei wurde der bei Beflammung eines Vergleichsmusters nach Beispiel 1 und 2 erhältliche sehr lockere und wenig stabile Intumeszenzschaum mit 6 benotet und die Stabilität von normalem festem Gaskoks mit 1, so daß sich eine relative Beurteilungsskala für die Stabilität ergab. Als Temperatur 120 wurde in der Tabelle die nach 120 Minuten Versuchsdauer auf der unbeschichteten Seite des Stahlblechs ermittelte Durchschnittstemperatur bezeichnet (°C).

Tabelle 1

| Beispiel Nr. | | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| P-Kondensationsprod. | K | 100 | | 100 | 50 | 100 | 100 | 100 | 100 | 100 | 100 | 100 | 100 | 100 | 100 | 100 | 50 | 100 |
| " " | L | | 60 | | 50 | | | | | | | | | | | | 50 | |
| Zusatzstoff | A | 100 | | 100 | | 100 | | 100 | 100 | 100 | 100 | | 100 | 100 | | 100 | | 100 |
| " | B | | 100 | | 100 | | 100 | | | | | 100 | | | 100 | | | |
| " | C | | | | | | | | | | | | | | 0,5 | 0,5 | | |
| " | D | 3 | 3 | 5 | 5 | 5 | 5 | 5 | 5 | 5 | 5 | 5 | 5 | 5 | 5 | 5 | | 3 |
| " | E | 15 | 15 | 20 | 20 | 20 | 20 | 20 | 20 | 20 | 20 | 20 | 20 | 20 | 20 | 20 | 20 | 18 |
| " | F | | | | | | | | | | | | | | | 570 | | |
| " | G | 100 | 50 | | | | | | | | | | | | | | | 60 |
| " | H | | | | | | | | | | | | | 1,1 | | 0,5 | | |
| Füllstoff | A | | | 200 | 150 | 160 | 160 | 160 | 140 | 120 | 100 | 160 | | 160 | 160 | 160 | | |
| " | B | | 15 | | | | | | | | | | 80 | | | | 80 | |
| " | C | | | | 50 | | | | | | | | 40 | | | | | |
| " | D | | | | | | | | | | | | 40 | | | | | |
| Borverbindung | A | | | | | 40 | 40 | | | | | | | | | | | |
| " | B | | | | | | | 40 | 60 | 80 | 100 | | | | 40 | 20 | | |
| " | C | | | | | | | | | | | 40 | 40 | 40 | | 20 | 40 | 40 |
| Polyisocyanat | A | | 120 | | | | | | | | | | | | | | | 70 |
| " | B | | | 180 | | | | | | | | | | | | | | |
| " | C | 140 | | | 180 | 180 | 180 | 180 | 180 | 180 | 180 | 180 | 180 | 180 | 180 | 180 | 110 | 70 |
| Härtung (ca. Min) | | 2,5 | 2,5 | 1,7 | 1,8 | 2,0 | 1,8 | 1,7 | 1,7 | 1,7 | 1,7 | 1,5 | 1,5 | 0,7 | 0,5 | 0,5 | 1,9 | 2,6 |
| Raumgewicht (g/$cm^3$) | | 1,15 | 1,13 | 1,14 | 1,15 | 0,31 | 0,28 | 1,15 | 1,14 | 1,15 | 1,15 | 1,13 | 1,21 | 1,12 | 1,13 | 1,11 | 1,00 | 1,13 |
| Intumeszenz (cm) | | 14 | 11 | 8 | 7 | 2 | 2 | 8 | 7 | 7 | 7 | 6 | 6 | 5 | 5 | 6 | 8 | 10 |
| Stabilität | | 6 | 6 | 5 | 5 | 3 | 3 | 3 | 2 | 1-2 | 1-2 | 1-2 | 1 | 2 | 2 | 2 | 2 | 3 |
| Temp. 120 | | 940 | 980 | 310 | 320 | 820 | 800 | 320 | 310 | 300 | 300 | 310 | 355 | 305 | 315 | 300 | 325 | 360 |

Bemerkungen zu den Beispielen 1 bis 17: Beispiel 1: ist ein Vergleichsbeispiel zur Charakterisierung des sehr weichen Intumeszenzschaumes ohne Zusatz von Borverbindungen.

Beispiel 2: Vergleichsbeispiel. Wie in Beispiel 1 zeigt sich die schlechte Beständigkeit des Intumeszenzschaumes gegen Flammenerosion darin, daß durch Abtragung des Schaumes durch die Flamme die Durchschnittstemperatur nach 120 Min. die 600° C-Marke überstiegen hat.

Beispiel 3: Vergleichsbeispiel. Hier zeigt sich bereits ein relativ gut wirksames Beschichtungsmaterial, dessen Intumeszenzschaum zwar im Kleinbrandversuch standhält, jedoch noch eine unbefreidigende Stabilität besitzt, die z.B. einem Löschwasserstrahl nicht genug Widerstand bieten kann.

Beispiel 4: Vergleichsbeispiel. Wie Beispiel 3 unter Verwendung des verseifungsbeständigeren Polyether-Zusatzmittels.

Beispiele 5 und 6: Hier wird gezeigt, daß die Verwendung von unentwässerter Borsäure zwar möglich ist, jedoch zu hochporösen Produkten führt, die sich im Brandversuch trotz eines bereits recht stabilen, aber mangels Masse wenig effektiven Intumeszenzeffektes nicht besonders gut bewähren. Es wird vielmehr zur Erzielung gut brauchbarer Produkte mit dehydratisierten Borsäuren gearbeitet.

Die Beispiele 7 bis 11 demonstrieren, daß mit steigenden Mengen dehydratisierter Borsäure keine Verschlechterung des massiven Charakters der Beschichtungen und Formteile beobachtet wird und, daß die erhältlichen Beschichtungen bei hervorragender Stabilität des Intumeszenzschaumes gute brandtechnische Eigenschaften besitzen. Einsatzmengen von ca. 20 % dehydratisierter Borsäure bzw. von Bortrioxid (beispielgemäß bezogen auf Menge an Füllstoff plus Borverbindungen) bewirken ausreichende Effekte.

Beispiel 12: Durch Wahl geeigneter Füllstoffkombination kann die Stabilität bei gegebenem Einsatz an Borverbindung noch gesteigert werden.

Beispiele 13 und 14: Der Zusatz von Katalysatoren für die Beschleunigung der Reaktion wirkt sich merkbar aus, so daß nach dem Sprühverfahren, durch die erzielbaren kurzen Reaktionszeiten bedingt, große Schichtdicken in einem Arbeitsgang aufgebracht werden können.

Beispiel 15: Der Zusatz des Zusatzstoffes F erhöht die Versprühbarkeit durch Viskositätsabsenkung und führt zu einem etwas zäheren Endprodukt. Vorteilhaft ist die verbesserte Beständigkeit gegen Entflammung beim Beaufschlagen mit einer Bunsenbrennerflamme im Vergleich zu Beispiel 5.

Beispiel 16: Auch ohne Polyester- bzw. Polyetherzusatzmittel ist ein Material mit stabilem Intumeszenzschaum zugänglich.

Beispiel 17: Der Zusatz der dehydratisierten Borsäure stabilisiert den Intumeszenzschaum aus Vergleichsbeispiel 1 zufriedenstellend.

## Ansprüche

1. Intumeszenzmassen, dadurch gekennzeichnet, daß sie erhältlich sind durch Umsetzung von Polyisocyanaten der Formel (2)

$$Q(NCO)_m \quad (2),$$

in der
m
für eine Zahl von 2 bis 4, vorzugsweise für 2,0 bis 3,0 und
Q
für einen aliphatischen Kohlenwasserstoffrest mit 2 bis 18 C-Atomen,
für einen cycloaliphatischen Kohlenwasserstoffrest mit 4 bis 15 C-Atomen,
für einen aromatischen Kohlenwasserstoffrest mit 6 bis 15 C-Atomen oder
für einen araliphatischen Kohlenwasserstoffrest mit 8 bis 15 C-Atomen steht,
mit mindestens zwei Hydroxylgruppen enthaltenden Phosphorhaltigen Kondensationsprodukten und Boroxiden und/oder Entwässerungsprodukten von Borsäuren.

2. Intumeszenzmassen nach Anspruch 1, dadurch gekennzeichnet, daß als mindestens zwei Hydroxylgruppen enthaltende phosphorhaltige Kondensationsprodukte solche der Formel (1)

$$(RO)_2PO-CH_2-N(CHX-CHX_1-OH)_2 \qquad (1),$$

in der
R für $C_1$-$C_8$-Alkyl oder $C_1$-$C_8$-Hydroxyalkyl und
X und $X_1$ unabhängig voneinander für Wasserstoff oder Methyl stehen,
zum Einsatz gelangen.

3. Intumeszenzmassen nach Ansprüchen 1 bis 2, dadurch gekennzeichnet, daß Bortrioxid oder Borsäure zum Einsatz gelangt, die bei Normaldruck mindestens bei 80°C 2 bis 60 Stunden lang getrocknet wurde.

4. Intumeszenzmassen nach Ansprüchen 1 bis 3, dadurch gekennzeichnet, daß sie Füllstoffe und/oder Hilfsstoffe enthalten.

5. Intumeszenzmassen nach Ansprüchen 1 bis 4, dadurch gekennzeichnet, daß sie als Füllstoff Aluminium-hydroxid oder dessen Dehydratisierungsprodukte enthalten.

6. Intumeszenzmassen nach Ansprüchen 1 bis 5, dadurch gekennzeichnet, daß sie als Hilfsstoffe Katalysatoren, Polyalkohole, Farbstoffe, Weichmacher, Verbindungen, die mit Isocyanaten reagieren können, Treibmittel und/oder Trockenmittel enthalten.

7. Beschichtungen und Konstruktionselemente, dadurch gekennzeichnet, daß sie unter Verwendung von Intumeszenzmassen gemäß den Ansprüchen 1 bis 6 hergestellt wurden.

8. Verfahren zur Herstellung von Intumeszenzmassen, dadurch gekennzeichnet, daß man Polyisocyanate mit wenigstens zwei Hydroxylgruppen enthaltenden phosphorhaltigen Kondensationsprodukten und Boroxiden und/oder Entwässerungsprodukten von Borsäure umsetzt und gegebenenfalls Füllstoffe und/oder Hilfsstoffe zufügt.

9. Verfahren nach Anspruch 8, dadurch gekennzeichnet, daß man Polyisocyanat im Verhältnis zu dem Kondensationsprodukt in Mengen von 50 bis 130 Mol-%, bezogen auf die stöchiometrisch erforderliche Menge und Boroxide und/oder Entwässerungsprodukte von Borsäure in Mengen von 0,5 bis 35 Gew.-%, bezogen auf den Gesamtansatz, umsetzt.

## Claims

1. Intumescent materials, characterized in that they can be obtained by reacting polyisocyanates of the formula (2)

$$Q(NCO)_m \qquad (2)$$

in which
m represents a number from 2 to 4, preferably 2.0 to 3.0, and
Q represents an aliphatic hydrocarbon radical having 2 to 18 C atoms, a cycloaliphatic hydrocarbon radical having 4 to 15 C atoms, an aromatic hydrocarbon radical having 6 to 15 C atoms, or an araliphatic hydrocarbon radical having 8 to 15 C atoms,
with phosphorus-containing condensation products containing at least two hydroxyl groups, and boron oxides and/or dehydration products of boric acids.

2. Intumescent materials according to Claim 1, characterized in that phosphorus-containing condensation products, containing at least two hydroxyl groups, of the formula (1)

$$(RO)_2PO-CH_2-N(CHX-CHX_1-OH)_2 \qquad (1)$$

in which
R represents $C_1$-$C_8$-alkyl or $C_1$-$C_8$-hydroxyalkyl, and
X and $X_1$, independently of one another, represent hydrogen or methyl,
are used.

3. Intumescent materials according to Claims 1 to 2, characterized in that boron trioxide or boric acid which has been dried for 2 to 60 hours at at least 80° C at atmospheric pressure is used.

4. Intumescent materials according to Claims 1 to 3, characterized in that they contain fillers and/or auxiliaries.

5. Intumescent materials according to Claims 1 to 4, characterized in that they contain as filler, aluminium hydroxide or its dehydration products.

6. Intumescent materials according to Claims 1 to 5, characterized in that they contain, as auxiliaries, catalysts, polyalcohols, dyestuffs, plasticizers, compounds which can react with isocyanates, and propellants and/or desiccants.

7. Coatings and building elements, characterized in that they have been produced using intumescent materials according to Claims 1 to 6.

8. Process for the preparation of intumescent materials, characterized in that polyisocyanates are reacted with phosphorus-containing condensation products containing at least two hydroxyl groups, and boron oxides and/or dehydration products of boric acid, and, if appropriate, fillers and/or auxiliaries are added.

9. Process according to Claim 8, characterized in that polyisocyanate is reacted in the ratio to the condensation product in amounts of 50 to 130 mol-%, relative to the stoichiometrically necessary amount, and boron oxides and/or dehydration products of boric acid are reacted in amounts from 0.5 to 35% by weight, relative to the total batch.

## Revendications

1. Masses intumescentes, caractérisées en ce qu'elles sont obtenues par réaction de polyisocyanates de formule (2)

$$Q(NCO)_m \qquad (2)$$

dans laquelle
m
est un nombre de 2 à 4, de préférence un nombre de 2,0 à 3,0 et
Q
représente un reste d'hydrocarbure aliphatique ayant 2 à 18 atomes de carbone,
un reste d'hydrocarbure cycloaliphatique ayant 4 à 15 atomes de carbone,
un reste d'hydrocarbure aromatique ayant 6 à 15 atomes de carbone ou
un reste d'hydrocarbure araliphatique ayant 8 à 15 atomes de carbone,
avec des produits phosphorés de condensation contenant au moins deux groupes hydroxyle et des oxydes de bore et/ou des produits de déshydratation d'acides boriques.

2. Masses intumescentes suivant la revendication 1, caractérisées en ce qu'on utilise comme produits phosphorés de condensation contenant au moins deux groupes hydroxyle des composés de formule (1)

$$(RO)_2PO-CH_2-N(CHX-CHX_1-OH)_2 \qquad (1)$$

dans laquelle

R

est un groupe alkyle en $C_1$ à $C_8$ ou hydroxyalkyle en $C_1$ à $C_8$ et

X et $X_1$

représentent, indépendamment l'un de l'autre, l'hydrogène ou un groupe méthyle.

**3.** Masses intumescentes suivant les revendications 1 et 2, caractérisées en ce qu'on utilise du trioxyde de bore ou de l'acide borique que l'on a séché à la pression normale pendant 2 à 60 heures à une température d'au moins 80° C.

**4.** Masses intumescentes suivant les revendications 1 à 3, caractérisées en ce qu'elles contiennent des charges et/ou des substances auxiliaires.

**5.** Masses intumescentes suivant les revendications 1 à 4, caractérisées en ce qu'elles contiennent comme charge de l'hydroxyde d'aluminium ou ses produits de déshydratation.

**6.** Masses intumescentes suivant les revendications 1 à 5, caractérisées en ce qu'elles contiennent comme substances auxiliaires des catalyseurs, des polyalcools, des colorants, des plastifiants, des composés qui peuvent réagir avec des isocyanates, des agents porogènes et/ou des agents desséchants.

**7.** Revêtements et éléments de construction, caractérisés en ce qu'ils ont été produits par l'utilisation de masses intumescentes suivant les revendications 1 à 6.

**8.** Procédé de production de masses intumescentes, caractérisé en ce qu'on fait réagir des polyisocyanates avec des produits phosphorés de condensation contenant au moins deux groupes hydroxyle et des oxydes de bore et/ou des produits de déshydratation de l'acide borique, et on ajoute éventuellement des charges et/ou des substances auxiliaires.

**9.** Procédé suivant la revendication 8, caractérisé en ce qu'on fait réagir un polyisocyanate par rapport au produit de condensation en quantités de 50 à 130 moles % relativement à la quantité stoechiométriquement nécessaire et les oxydes boriques et/ou les produits de déshydratation de l'acide borique en quantités de 0,5 à 35 % en poids, par rapport à la charge totale.